# FASCICULE DE BREVET EUROPEEN

(11) **EP 2 898 228 B1**
(45) Date de publication et mention de la délivrance du brevet: **08.08.2018**
(21) Numéro de dépôt: 13774734.1
(22) Date de dépôt: 11.09.2013
(51) Int. Cl.: F16B 21/02

(54) **INSERT POUR SUPPORT DE VEHICULE AUTOMOBILE, AGENCEMENT METTANT EN OEUVRE L'INSERT ET VEHICULE AUTOMOBILE INTEGRANT L'AGENCEMENT**
EINSATZ ZUR UNTERSTÜTZUNG EINES KRAFTFAHRZEUGS, ANORDNUNG MIT DIESEM EINSATZ UND KRAFTFAHRZEUG MIT DIESER ANORDNUNG
INSERT FOR THE SUPPORT OF A MOTOR VEHICLE, ARRANGEMENT IMPLEMENTING SAID INSERT AND MOTOR VEHICLE COMPRISING SAID ARRANGEMENT

(30) Priorité: 21.09.2012 FR 1258861
(43) Date de publication de la demande: 29.07.2015
(73) Titulaire: Renault S.A.S., 92100 Boulogne-Billancourt (FR)
(72) Inventeur: LECROQ, Dominique, F-27540 Ivry La Bataille (FR); DAVID, Patrick, F-78310 Maurepas (FR)
(86) Numéro de dépôt international: PCT/FR2013/052081
(87) Numéro de publication internationale: WO 2014/044953

(56) Documents cités:
- EP-A2- 1 452 748
- DE-U1-202004 010 746
- FR-A1- 2 452 022

## Description

### Domaine technique de l'invention

L'invention concerne le domaine de l'automobile, notamment la fixation d'un élément fonctionnel d'un véhicule automobile à un support.

L'invention a pour objet un insert permettant de lier le support à l'élément fonctionnel, et plus particulièrement le montage de l'insert sur le support.

### État de la technique

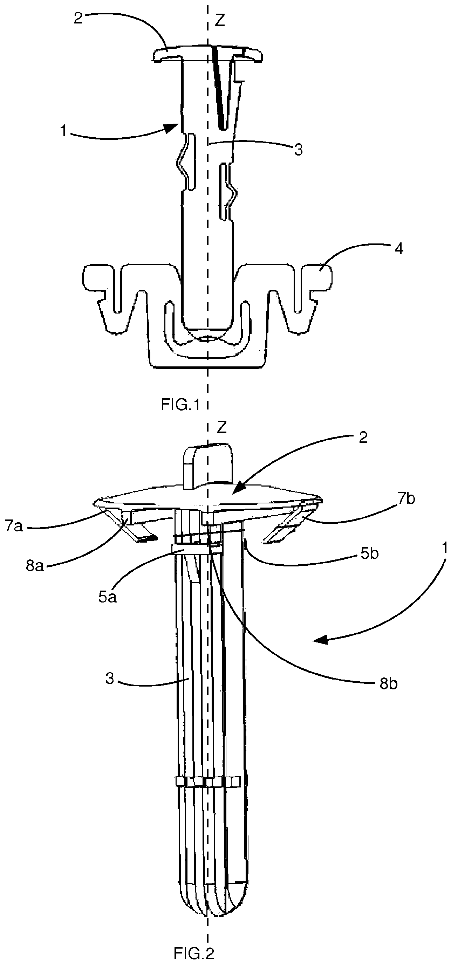

Afin de fixer un élément fonctionnel de véhicule comme un module de refroidissement, il est possible d'utiliser un insert tel qu'illustré à la figure 1.

L'insert 1 comporte une tête 2 à partir de laquelle s'étend un corps allongé 3 selon un axe longitudinal Z. Cet axe longitudinal est généralement un axe sensiblement vertical. A l'extrémité du corps allongé 3 opposée à la tête 2, ledit corps allongé 3 peut coopérer avec un organe de montage 4 associé à l'élément fonctionnel.

Il résulte d'un tel insert qu'il est possible d'effectuer un verrouillage selon l'axe Z, mais que le passage de l'état verrouillé à l'état déverrouillé peut facilement être mis en oeuvre, de telle sorte que le passage de l'état verrouillé à l'état déverrouillé peut avoir lieu même si il n'est pas souhaité.

Il est connu du document EP1452748-A2 un insert permettant d'assembler deux pièces ensemble par une rotation de l'insert entre une position déverrouillée et une position verrouillée dans laquelle la tête de l'insert vient en appui contre l'une des deux pièces à assembler, ce qui tend à rendre son déverrouillage complexe.

### Objet de l'invention

Le but de la présente invention est de proposer une solution permettant de garantir le maintien de l'insert dans son état verrouillé tout en rendant apte son déverrouillage.

On tend vers ce but notamment grâce à un insert pour support de véhicule automobile, ledit insert comprenant une tête à partir de laquelle s'étend un corps allongé selon un axe longitudinal Z, l'insert étant configuré pour varier, par pivotement de l'insert autour de l'axe longitudinal Z, entre un état verrouillé dans lequel la tête et une butée, portée par le corps allongé, sont destinées à coopérer avec un élément de verrouillage axial porté par le support de sorte à inhiber un mouvement de translation de l'insert par rapport audit support le long de l'axe longitudinal Z, et un état déverrouillé dans lequel le corps allongé de l'insert est apte à être inséré dans une ouverture du support ou retiré de l'ouverture du support, et l'insert comporte un premier élément de verrouillage en rotation monté sur la tête et configuré de sorte à inhiber la rotation de l'insert autour de l'axe longitudinal Z, par coopération avec un second élément de verrouillage en rotation porté par le support, lorsque l'insert est en état verrouillé.

Selon l'invention, l'insert de la tête comporte un élément d'arrêt axial configuré de sorte à coopérer avec la butée afin d'assurer le verrouillage axial du support entre la butée et ledit élément d'arrêt axial. En outre, l'élément d'arrêt est formé en saillie d'une surface de la tête portant le premier élément de verrouillage, ledit élément d'arrêt étant configuré de sorte à interposer, à l'état verrouillé, un espace libre entre ladite surface de la tête et le support de sorte à permettre l'accès au premier élément de verrouillage.

Avantageusement, le premier élément de verrouillage en rotation comporte au moins une lame montée sur la tête, notamment montée à la périphérie de la tête, et s'étendant de la tête en direction du corps allongé.

De préférence, chaque lame est déformable élastiquement, et est configurée de sorte à solliciter, dans l'état verrouillé, constamment la tête dans une direction opposée audit support.

Selon un perfectionnement, l'insert peut comporter, au niveau d'une face opposée à celle d'où s'étend le corps allongé, un élément d'entraînement en rotation de l'insert formé par une empreinte négative réalisée dans la tête, ou par un élément de préhension faisant saillie de la tête.

L'invention est aussi relative à un agencement pour véhicule automobile comportant un support et au moins un insert tel que décrit monté sur le support, et positionné en état verrouillé au support, le premier élément de verrouillage comprend deux lames opposées, disposées le long d'un axe Y, s'étendant chacune de la tête en direction du corps allongé de l'insert, et coopérant chacune avec le support pour inhiber la rotation de l'insert autour de l'axe Z en état verrouillé, un élément d'arrêt en saillie de la tête, destiné à assurer avec la butée le verrouillage en translation selon l'axe longitudinal Z, s'étend selon un axe X passant par l'avant et l'arrière du véhicule et sensiblement horizontal, ledit élément d'arrêt étant en contact avec le support et configuré de sorte à permettre le passage d'un outil entre la tête et le support de sorte à rapprocher des extrémités libres des lames en direction de la tête de sorte à permettre la rotation de l'insert autour de son axe longitudinal Z pour passer de l'état verrouillé de l'insert à l'état déverrouillé de l'insert, ledit axe Y étant sensiblement horizontal et sensiblement perpendiculaire à l'axe X.

Préférentiellement, l'agencement comporte un élément fonctionnel de véhicule, comme un module de refroidissement, et l'extrémité du corps allongé opposée à la tête de l'insert coopère par accouplement avec un organe de montage de l'élément fonctionnel, le corps allongé de l'insert comportant une amorce de rupture située entre le support et l'organe de montage, ledit corps allongé s'étendant selon son axe longitudinal Z dans une direction sensiblement verticale.

L'invention est aussi relative à un véhicule automobile comprenant un agencement tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue d'un insert selon l'art antérieur,
- la figure 2 est une vue en perspective d'un insert selon un mode de réalisation de l'invention,
- la figure 3 est une vue de côté d'un insert monté à un support en état verrouillé selon la figure 2,
- les figures 4 et 5 illustrent le fonctionnement du verrouillage de l'insert selon son axe longitudinal dans un mode de réalisation particulier,
- la figure 6 illustre une vue de côté de l'insert de la figure 3 selon une rotation de 90° autour à son axe longitudinal,
- la figure 7 est une vue en perspective d'un insert verrouillé à un support vue de dessous,
- la figure 8 est une vue schématique d'un insert, monté en position verrouillée au support, centrée sur l'élément de verrouillage en rotation,
- les figures 9 et 10 illustrent chacune une vue détaillée d'une tête de l'insert.

### Description de modes préférentiels de l'invention

L'insert décrit ci-après diffère de l'art antérieur notamment en ce qu'il comporte un élément de verrouillage autour de l'axe longitudinal Z de son corps allongé et que cet élément de verrouillage est monté sur la tête de l'insert.

Pour des raisons de simplification, des éléments décrits ci-après auront des références identiques aux éléments similaires de l'état de la technique.

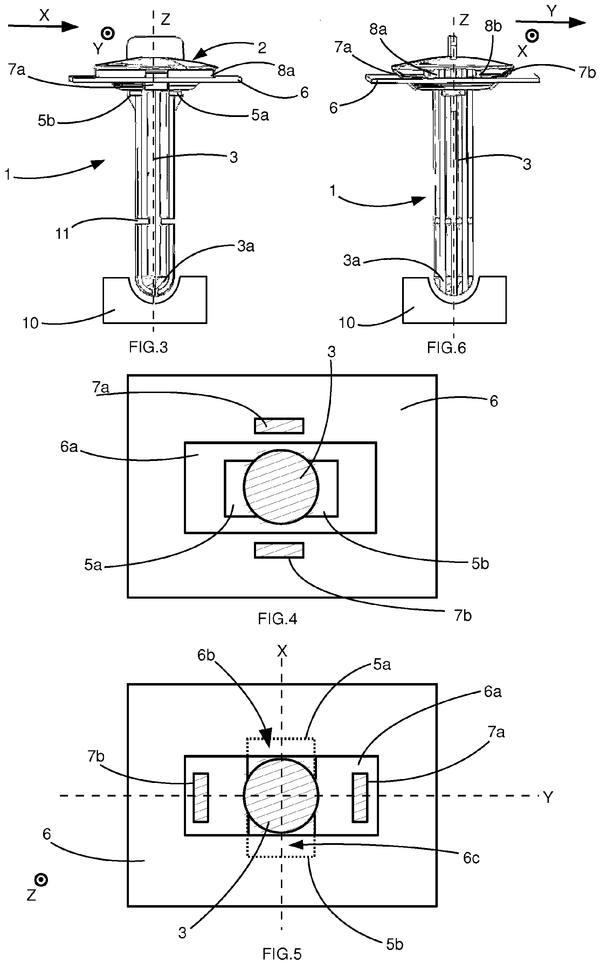

Sur les figures 2 et 3, l'insert 1 pour support 6 de véhicule automobile comprend une tête 2 à partir de laquelle s'étend un corps allongé 3 selon un axe longitudinal Z. L'insert est configuré pour varier, par pivotement de l'insert 1 autour de l'axe longitudinal Z, entre un état verrouillé et un état déverrouillé.

Dans l'état verrouillé la tête 2 et une butée 5a, 5b, ladite butée 5a, 5b étant portée par le corps allongé, sont destinées à coopérer avec un élément de verrouillage axial porté par le support 6 de sorte à inhiber un mouvement de translation de l'insert 1 par rapport audit support 6 le long de l'axe longitudinal Z. L'élément de verrouillage axial peut être une portion du support 6 montée entre la tête 2 et la butée 5a. Avantageusement, afin de répartir les efforts, l'insert 1 comporte deux butées 5a, 5b opposées disposées de part et d'autre du corps allongé 3. Dans ce cas deux portions opposées correspondantes du support 6 peuvent être respectivement prises en chape de sorte à verrouiller le débattement axial, selon l'axe Z, de l'insert nonobstant un jeu fonctionnel résiduel. Dans le cas où les deux butées 5a, 5b sont opposées, on peut considérer que l'insert est de type quart de tour, c'est-à-dire qu'une fois inséré dans une ouverture du support, un quart de tour appliqué à l'insert selon l'axe Z permet de verrouiller l'insert au support 6.

Dans l'état déverrouillé le corps 3 allongé de l'insert est apte à être inséré dans une ouverture du support 6 ou retiré de l'ouverture du support 6.

La figure 4 illustre schématiquement l'état déverrouillé selon une coupe transversale de l'insert réalisée entre la tête et les butées 5a, 5b, et dont la vue est orientée en direction des butées. Dans ce cas, on voit clairement que le corps allongé 3 est apte à se déplacer perpendiculairement au plan de la figure 4 au travers de l'ouverture 6a du support 6. L'ouverture 6a est donc pratiquée de sorte que dans une position idoine dudit corps allongé 3, les butées 5a, 5b ne gênent pas le passage au travers de l'ouverture 6a. Pour cela, l'ouverture 6a peut comporter dans deux directions perpendiculaires des dimensions différentes.

La figure 5 représente la même vue que la figure 4 avec les mêmes éléments, mais cette fois l'insert est en état verrouillé par rapport au support 6. Dans cette configuration, les butées 5a, 5b empêchent, en coopération avec la tête non visible la translation du corps allongé 3 dans une direction perpendiculaire au plan de la figure 5. L'élément de verrouillage axial appartenant au support 6 est représenté par les portions 6b et 6c du support 6.

En outre, aux figures 2 et 3, l'insert comporte un premier élément de verrouillage 7a, 7b en rotation monté sur la tête 2 et configuré de sorte à inhiber la rotation de l'insert autour de l'axe longitudinal Z, par coopération avec un second élément de verrouillage en rotation porté par le support 6, lorsque l'insert 1 est en état verrouillé. Les figures 3, 5 et 6 illustrent l'insert 1 associé à un support 6 dans lequel l'insert est en état verrouillé par rapport au support 6. On voit clairement sur les figures 3 et 6 que le premier élément de verrouillage 7a, 7b coopère avec le second élément de verrouillage qui est mis en oeuvre ici par des faces internes de l'ouverture reliant deux faces opposées du support 6.

Selon une mise en oeuvre particulière, le premier élément de verrouillage en rotation comporte au moins une lame 7a, 7b montée sur la tête, notamment montée à la périphérie de la tête, et s'étendant de la tête 2 en direction du corps allongé 3. Une lame 7a, 7b, peut par exemple se présenter sous la forme d'un élément dont une extrémité est fixée à la tête 2, et dont l'extrémité opposé est laissée libre. Comme illustré aux figures 2, 3, 6 et 7, le premier élément de verrouillage comporte avantageusement deux lames 7a, 7b, de préférences disposées au niveau de la tête de part et d'autre du corps allongé 3. Dans la réalisation quart de tour, les deux butées 5a, 5b sont disposées le long d'un premier axe X (figure 3) et les deux lames sont disposées le long d'un deuxième axe Y (figure 6), les premier et deuxième axes étant sensiblement perpendiculaires l'un à l'autre. Le fait que l'interface d'une lame 7a, 7b avec la tête 2 soit réalisée à la périphérie de la tête 2 permet de rendre plus accessible la lame associée pour faciliter le passage de l'état verrouillé à l'état déverrouillé.

Avantageusement, chaque lame 7a, 7b est déformable élastiquement. Cette déformation élastique permet, dans la cinématique du passage de l'état déverrouillé à l'état verrouillé (figures 4 et 5), à chaque lame 7a, 7b de prendre appui sur le support 6 de sorte à recourber les lames en direction de la tête de l'insert, puis lors du pivotement, lorsque l'insert passe en position verrouillée, chaque lame reprend naturellement sa position de sorte à au moins partiellement pénétrer dans l'ouverture 6a afin d'empêcher la rotation de l'insert autour de son axe longitudinal Z. De plus, la déformation élastique permet, dans la cinématique du passage de l'état verrouillé à l'état déverrouillé, de volontairement prendre appui, notamment via un outil idoine, sur chaque lame de sorte à la sortir de l'ouverture 6a, puis d'initier un pivotement de l'insert de sorte à relâcher le verrouillage axial.

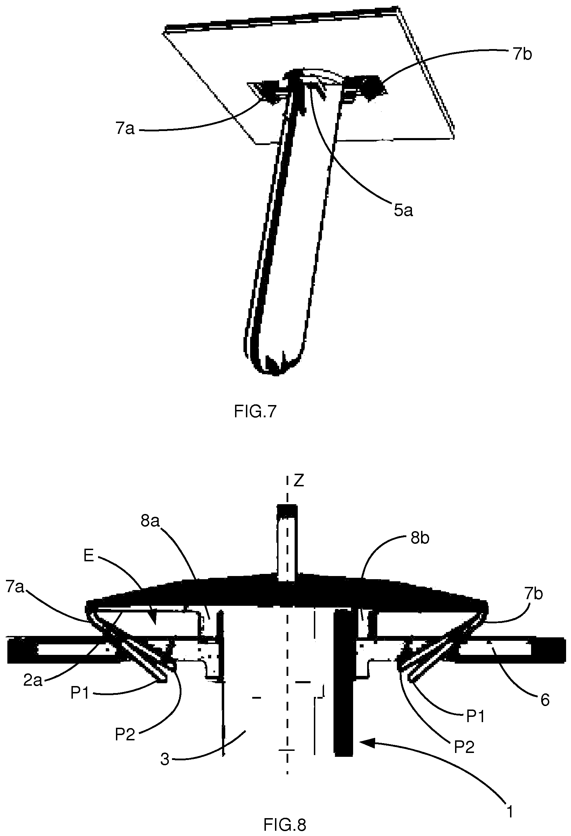

De préférence, chaque lame 7a, 7b est configurée de sorte à solliciter, dans l'état verrouillé, constamment la tête 2 dans une direction opposée audit support 6. Autrement dit, dans l'état verrouillé, chaque lame 7a, 7b est en contact avec le support 6 de sorte que le support 6 applique, notamment grâce au verrouillage axial réalisé par la tête 2 et chaque butée 5a, 5b, une contrainte sur la lame associée pour l'empêcher de revenir à son état naturel dans lequel elle se trouve lorsqu'aucune contrainte n'est appliquée sur cette dernière. La figure 8 illustre par la référence P1 la position d'une lame 7a, 7b lorsqu'aucune contrainte n'est appliquée sur ladite lame 7a, 7b, et par la référence P2 la position d'une lame 7a, 7b dans l'état verrouillé de l'insert 1 monté sur le support 6. Cette sollicitation constante permet, le cas échéant de limiter un éventuel jeu fonctionnel axial selon l'axe Z. Ce rattrapage de jeu selon l'axe Z permet de limiter les risques de remontée de bruit et de réduire la mise au point outillage.

Selon une mise en oeuvre particulière visible aux figures 2, 3, 6 et 8, la tête 2 comporte un élément d'arrêt axial 8a, 8b configuré de sorte à coopérer avec la butée 5a, 5b afin d'assurer le verrouillage axial du support 6 entre la butée 5a, 5b et ledit élément d'arrêt axial. L'élément d'arrêt est avantageusement configuré de sorte à faciliter le passage de l'état verrouillé à l'état déverrouillé de l'insert.

Il résulte du verrouillage en rotation mettant en oeuvre au moins une lame, une problématique relative à l'actionnement de chaque lame si l'on souhaite passer de l'état verrouillé de l'insert à son état déverrouillé. Afin de faciliter cet actionnement, l'élément d'arrêt 8a, 8b peut être formé en saillie d'une surface 2a (figure 8) de la tête 2 portant le premier élément de verrouillage 7a, 7b, ledit élément d'arrêt 8a, 8b étant configuré de sorte à interposer, à l'état verrouillé, un espace libre E (figure 8) entre ladite surface 2a de la tête 2 et le support 6 de sorte à permettre l'accès au premier élément de verrouillage 7a, 7b.

De préférence, l'élément d'arrêt axial comporte deux saillies 8a, 8b disposées de part et d'autre du corps allongé 3 et s'étendant de la surface 2a. Ces saillies sont avantageusement allongées selon une direction d'axe X. Chacune des saillies peut se présenter sous la forme d'une barre allongée selon l'axe X dont une section transversale à l'allongement présente un contour carré ou rectangulaire. Ces deux saillies 8a, 8b possèdent chacune un sommet, opposé à ladite surface 2a, destiné à former une portée d'appui contre le support 6 en état verrouillé.

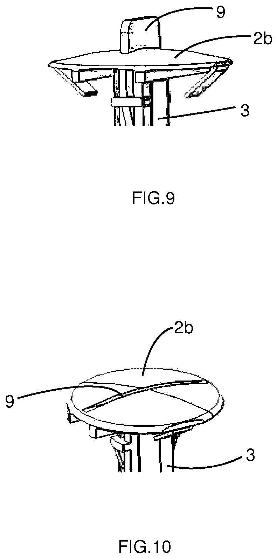

Sur les figures 9 et 10, afin de faciliter le passage d'un état à l'autre, l'insert 1 peut comporter, au niveau d'une face 2b opposée à celle d'où s'étend le corps allongé 3, un élément d'entraînement 9 en rotation de l'insert 1 formé par une empreinte négative réalisée dans la tête 2 (figure 10), ou par un élément de préhension faisant saillie de la tête 2 (figure 9). L'avantage de l'élément de préhension est qu'il est possible de réaliser le montage à la main si ce dernier est accessible, alors que l'empreinte nécessitera l'utilisation d'un outil.

Un agencement pour véhicule automobile peut comporter un support 6 et au moins un insert 1 tel que décrit précédemment et monté sur le support. Cet insert 1 est alors positionné en état verrouillé au support 6.

Selon la description qui a été faite ci-avant et dans les réalisations ci-après, l'axe Z est avantageusement sensiblement vertical, l'axe X est avantageusement sensiblement parallèle à un axe passant par l'avant et l'arrière du véhicule et sensiblement horizontal, et l'axe Y est avantageusement sensiblement horizontal et sensiblement perpendiculaire à l'axe X.

Par « un axe sensiblement vertical, parallèle, horizontal, perpendiculaire », on entend un axe respectivement exactement vertical, parallèle, horizontal, perpendiculaire ou un axe vertical, parallèle horizontal, perpendiculaire à plus ou moins 5 degré.

L'agencement peut en outre comporter un élément fonctionnel de véhicule, comme un module de refroidissement (non représenté). Dans ce cas (figures 3 et 6), l'extrémité 3a du corps allongé 3 opposée à la tête 2 de l'insert coopère par accouplement avec un organe de montage 10 de l'élément fonctionnel. En cas de choc, il est préférable que l'élément fonctionnel soit désolidarisé du support, pour cela le corps allongé 3 de l'insert peut comporter une amorce de rupture 11 située entre le support 6 et l'organe de montage 10 (figure 3). De préférence, le corps allongé 3 s'étend dans une direction Z sensiblement verticale (c'est-à-dire qu'il peut s'étendre selon son axe longitudinal Z dans une direction sensiblement verticale).

De manière plus générale, l'insert peut comporter une amorce de rupture formée par un amincissement local de l'épaisseur du corps allongé, notamment selon l'axe X. Cet amincissement local selon l'axe X permet de faciliter la rupture de l'insert en cas de choc frontal ou arrière du véhicule pour des raisons de sécurité.

Selon une réalisation préférentielle de l'agencement le premier élément de verrouillage comprend deux lames 7a, 7b opposées, disposées le long d'un axe Y. Chaque lame 7a, 7b s'étend de la tête 2 en direction du corps allongé 3 de l'insert 1. Chaque lame 7a, 7b coopère avec le support 6 pour inhiber la rotation de l'insert 1 autour de l'axe Z en état verrouillé. L'élément d'arrêt 8a, 8b en saillie de la tête 2, destiné à assurer avec la butée 5a, 5b le verrouillage en translation selon l'axe longitudinal Z, s'étend selon un axe X passant par l'avant et l'arrière du véhicule et sensiblement horizontal. Cette direction de l'élément d'arrêt permet de présenter un appui selon la direction avant arrière du véhicule pour absorber au mieux les efforts. Ledit élément d'arrêt est en contact avec le support 6 et est configuré de sorte à permettre le passage d'un outil entre la tête 2 et le support 6 de sorte à rapprocher des extrémités libres des lames 7a, 7b en direction de la tête 2 de sorte à permettre la rotation de l'insert 1 autour de son axe longitudinal Z pour passer de l'état verrouillé de l'insert 1 à l'état déverrouillé de l'insert. L'axe Y est sensiblement horizontal et sensiblement perpendiculaire à l'axe X.

Un véhicule automobile peut comprendre un agencement tel que décrit ci-dessus.

Un procédé de fixation d'un élément fonctionnel de véhicule, notamment un module de refroidissement, peut comporter une étape de positionnement d'un organe de montage 10 (figures 3, 6) de l'élément fonctionnel en regard d'un support 6 de sorte que l'insertion d'un insert 1 dans le support 6 engendre l'accouplement de l'extrémité du corps allongé 3 de l'insert 1 opposé à la tête 2 de l'insert 1 avec l'organe de montage 10. Une étape de verrouillage permet à l'insert 1 d'occuper un état verrouillé avec le support 6, et dans cet état verrouillé l'insert 1 est aussi accouplé avec l'organe de montage 10 de l'élément fonctionnel. L'étape de verrouillage peut mettre en oeuvre une étape d'insertion du corps allongé 3 de l'insert 1 dans une ouverture 6a du support 6, puis une étape de mise en rotation de l'insert 1 sur lui-même lorsque la tête 2 de l'insert 1 est en contact avec le support 6. Cette étape de mise en rotation de l'insert 1 peut être réalisée en appliquant un quart de tour à l'insert 1. Le procédé peut mettre en oeuvre plusieurs inserts 1 coopérant chacun avec une ouverture 6a associée du support 6 et un organe de montage 10 associé.

Selon une mise en oeuvre particulière, le support peut être un support plastique, ou un support en tôle comprenant par exemple un emboutissement de la tôle au niveau de l'ouverture. Dans le cas où la tôle est emboutie, l'épaisseur prise en sandwich entre la tête et la ou les butées est à peu près égale à deux fois l'épaisseur de la tôle plus la profondeur d'emboutissage.

L'insert est préférablement obtenu par moulage d'une matière. Ses formes sont avantageusement réalisées de sorte qu'il est démoulable naturellement sans ajout de tiroir. Ceci permet une réduction dans le coût du moule et dans le temps du cycle d'injection associé de la matière dans le moule.

## Revendications

1. Insert (1) pour support (6) de véhicule automobile, ledit insert (1) comprenant une tête (2) à partir de laquelle s'étend un corps allongé (3) selon un axe longitudinal Z, l'insert (1) est configuré pour varier, par pivotement de l'insert (1) autour de l'axe longitudinal Z, entre un état verrouillé dans lequel la tête (2) et une butée (5a, 5b), portée par le corps allongé (3), sont destinées à coopérer avec un élément de verrouillage (6c, 6b) axial porté par le support (6) de sorte à inhiber un mouvement de translation de l'insert (1) par rapport audit support (6) le long de l'axe longitudinal Z, et un état déverrouillé dans lequel le corps allongé (3) de l'insert (1) est apte à être inséré dans une ouverture (6a) du support (6) ou retiré de l'ouverture (6a) du support (6), l'insert (1) comporte un premier élément de verrouillage en rotation (7a, 7b) monté sur la tête (2) et configuré de sorte à inhiber la rotation de l'insert (1) autour de l'axe longitudinal Z, par coopération avec un second élément de verrouillage en rotation porté par le support (6), lorsque l'insert (1) est en état verrouillé, **caractérisé en ce que** la tête (2) comporte un élément d'arrêt axial (8a, 8b) configuré de sorte à coopérer avec la butée (5a, 5b) afin d'assurer le verrouillage axial du support entre la butée (5a, 5b) et ledit élément d'arrêt axial (8a, 8b), et **en ce que** l'élément d'arrêt (8a, 8b) est formé en saillie d'une surface (2a) de la tête (2) portant le premier élément de verrouillage (7a, 7b), ledit élément d'arrêt (8a, 8b) étant configuré de sorte à interposer, à l'état verrouillé, un espace libre (E) entre ladite surface (2a) de la tête (2) et le support (6) de sorte à permettre l'accès au premier élément de verrouillage (7a, 7b).

2. Insert selon la revendication 1, **caractérisé en ce que** le premier élément de verrouillage (7a, 7b) en rotation comporte au moins une lame (7a, 7b) montée sur la tête (2), notamment montée à la périphérie de la tête (2), et s'étendant de la tête (2) en direction du corps allongé (3).

3. Insert selon la revendication 2, **caractérisé en ce que** chaque lame (7a, 7b) est déformable élastiquement, et est configurée de sorte à solliciter, dans l'état verrouillé, constamment la tête (2) dans une direction opposée audit support (6).

4. Insert selon l'une quelconque des revendications précédentes, **caractérisé en ce qu'**il comporte, au niveau d'une face (2b) opposée à celle d'où s'étend le corps allongé (3), un élément d'entraînement (9) en rotation de l'insert (1) formé par une empreinte négative réalisée dans la tête (2), ou par un élément de préhension faisant saillie de la tête (2).

5. Agencement pour véhicule automobile comportant un support (6) et au moins un insert (1) selon l'une quelconque des revendications précédentes monté sur le support (6), et positionné en état verrouillé au support (6), **caractérisé en ce que** le premier élément de verrouillage comprend deux lames (7a, 7b) opposées, disposées le long d'un axe Y, s'étendant chacune de la tête (2) en direction du corps allongé (3) de l'insert (1), et coopérant chacune avec le support (6) pour inhiber la rotation de l'insert (1) autour de l'axe Z en état verrouillé, et **en ce qu'**un élément d'arrêt (8a, 8b) en saillie de la tête (2), destiné à assurer avec la butée (5a, 5b) le verrouillage en translation selon l'axe longitudinal Z, s'étend selon un axe X passant par l'avant et l'arrière du véhicule et sensiblement horizontal, ledit élément d'arrêt étant en contact avec le support (6) et configuré de sorte à permettre le passage d'un outil entre la tête (6) et le support (6) de sorte à rapprocher des extrémités libres des lames (7a, 7b) en direction de la tête (2) de sorte à permettre la rotation de l'insert (1) autour de son axe longitudinal Z pour passer de l'état verrouillé de l'insert (1) à l'état déverrouillé de l'insert (1), ledit axe Y étant sensiblement horizontal et sensiblement perpendiculaire à l'axe X..

6. Agencement selon la revendication 5, **caractérisé en ce qu'**il comporte un élément fonctionnel de véhicule, comme un module de refroidissement, et **en ce que** l'extrémité (3a) du corps allongé (3) opposée à la tête (2) de l'insert (1) coopère par accouplement avec un organe de montage (10) de l'élément fonctionnel, le corps allongé (3) de l'insert comportant une amorce de rupture (11) située entre le support (6) et l'organe de montage (10), ledit corps allongé (3) s'étendant selon son axe longitudinal Z dans une direction sensiblement verticale.

7. Véhicule automobile comprenant un agencement selon la revendication 5 ou 6.

## Patentansprüche

1. Einsatz (1) für eine Stütze (6) eines Kraftfahrzeugs, wobei der Einsatz (1) einen Kopf (2) umfasst, von dem aus sich ein länglicher Körper (3) entlang einer Längsachse Z erstreckt, wobei der Einsatz (1) eingerichtet ist, um durch Schwenken des Einsatzes (1) um die Längsachse Z zwischen einem verriegelten Zustand, in dem der Kopf (2) und ein Anschlag (5a, 5b), der vom länglichen Körper (3) getragen wird, dazu bestimmt sind, mit einem axialen Verriegelungselement (6c, 6d) zusammenzuwirken, das von der Stütze (6) getragen wird, um eine Translationsbewegung des Einsatzes (1) in Bezug zur Stütze (6) entlang der Längsachse Z zu verhindern, und einem entriegelten Zustand, in dem der längliche Körper (3) des Einsatzes (1) geeignet ist, in eine Öffnung (6a) der Stütze (6) eingesetzt oder aus der Öffnung (6a) der Stütze (6) herausgezogen zu werden, zu variieren, wobei der Einsatz (1) ein erstes Drehverriegelungselement (7a, 7b) umfasst, das auf dem Kopf (2) montiert und eingerichtet ist, um die Drehung des Einsatzes (1) um die Längsachse Z durch Zusammenwirken mit einem zweiten Drehverriegelungselement, das von der Stütze (6) getragen wird, zu verhindern, wenn sich der Einsatz (1) im verriegelten Zustand befindet, **dadurch gekennzeichnet, dass** der Kopf (2) ein axiales Halteelement (8a, 8b) umfasst, das eingerichtet ist, um mit dem Anschlag (5a, 5b) zusammenzuwirken, um die axiale Verriegelung der Stütze zwischen dem Anschlag (5a, 5b) und dem axialen Halteelement (8a, 8b) zu gewährleisten, und dass das Halteelement (8a, 8b) aus einer Oberfläche (2a) des Kopfes (2), die das erste Verriegelungselement (7a, 7b) trägt, herausragend ausgebildet ist, wobei das Halteelement (8a, 8b) eingerichtet ist, um im verriegelten Zustand einen Freiraum (E) zwischen der Oberfläche (2a) des Kopfes (2) und der Stütze (6) vorzusehen, um den Zugang zum ersten Verriegelungselement (7a, 7b) zu ermöglichen.

2. Einsatz nach Anspruch 1, **dadurch gekennzeichnet, dass** das erste Drehverriegelungselement (7a, 7b) mindestens eine Lamelle (7a, 7b) umfasst, die auf dem Kopf (2) montiert ist, insbesondere an der Peripherie des Kopfes (2) montiert ist und sich vom Kopf (2) in Richtung des länglichen Körpers (3) erstreckt.

3. Einsatz nach Anspruch 2, **dadurch gekennzeichnet, dass** jede Lamelle (7a, 7b) elastisch verformbar und eingerichtet ist, um im verriegelten Zustand den Kopf (2) konstant in eine zur Stütze (6) entgegengesetzte Richtung zu drücken.

4. Einsatz nach einem der vorhergehenden Ansprüche, **dadurch gekennzeichnet, dass** er im Bereich einer Seite (2b), die jener gegenüberliegt, von der aus sich der längliche Körper (3) erstreckt, ein Drehantriebselement (9) des Einsatzes (1) umfasst, das von einem negativen Abdruck, der im Kopf (2) vorgesehen ist, oder von einem aus dem Kopf (2) herausragenden Greifelement gebildet ist.

5. Anordnung für ein Kraftfahrzeug, umfassend eine Stütze (6) und mindestens einen Einsatz (1) nach einem der vorhergehenden Ansprüche, der auf der Stütze (6) montiert und im verriegelten Zustand auf der Stütze (6) positioniert ist, **dadurch gekennzeichnet, dass** das erste Verriegelungselement zwei entgegengesetzt liegende Lamellen (7a, 7b) umfasst, die entlang einer Achse Y angeordnet sind, die sich jeweils vom Kopf (2) in Richtung des länglichen Körpers (3) des Einsatzes (1) erstrecken und jeweils mit der Stütze (6) zusammenwirken, um die Drehung des Einsatzes (1) um die Achse Z im verriegelten Zustand zu verhindern, und dass sich ein aus dem Kopf (2) herausragendes Halteelement (8a, 8b), das dazu bestimmt ist, mit dem Anschlag (5a, 5b) die Verriegelung in Translation entlang der Achse Z zu gewährleisten, entlang einer Achse X, die von vorne nach hinten durch das Fahrzeug verläuft und im Wesentlichen horizontal ist, erstreckt, wobei das Halteelement mit der Stütze (6) in Kontakt und eingerichtet ist, um den Durchgang eines Werkzeugs zwischen dem Kopf (6) und der Stütze (6) zu ermöglichen, um die freien Enden der Lamellen (7a, 7b) in Richtung des Kopfes (2) anzunähern, um die Drehung des Einsatzes (1) um seine Längsachse Z zu ermöglichen, um vom verriegelten Zustand des Einsatzes (1) in den entriegelten Zustand des Einsatzes (1) überzugehen, wobei die Achse Y im Wesentlichen horizontal und im Wesentlichen senkrecht auf die Achse X ist.

6. Anordnung nach Anspruch 5, **dadurch gekennzeichnet, dass** sie ein Funktionselement eines Fahrzeugs, wie ein Kühlmodul, umfasst, und dass das Ende (3a) des länglichen Körpers (3), das dem Kopf (2) des Einsatzes (1) gegenüberliegt, durch Kopplung mit einem Montageelement (10) des Funktionselements zusammenwirkt, wobei der längliche Körper (3) des Einsatzes einen Bruchansatz (11) umfasst, der sich zwischen der Stütze (6) und dem Montageelement (10) befindet, wobei sich der längliche Körper (3) entlang seiner Längsachse Z in eine im Wesentlichen vertikale Richtung erstreckt.

7. Kraftfahrzeug, umfassend eine Anordnung nach Anspruch 5 oder 6.

## Claims

1. Insert (1) for a support (6) of a motor vehicle, said insert (1) comprising a head (2) from which extends an elongate body (3) along a longitudinal axis Z, the insert (1) is configured to vary, by pivoting the insert (1) about the longitudinal axis Z, between a locked state in which the head (2) and an abutment (5a, 5b), borne by the elongate body (3), are intended to cooperate with an axial locking element (6c, 6b) borne by the support (6) so as to inhibit a translational movement of the insert (1) with respect to said support (6) along the longitudinal axis Z, and an unlocked state in which the elongate body (3) of the insert (1) is able to be inserted into an opening (6a) of the support (6) or removed from the opening (6a) of the support (6), the insert (1) comprises a first rotation-locking element (7a, 7b) mounted on the head (2) and configured so as to inhibit the rotation of the insert (1) about the longitudinal axis Z, by cooperation with a second rotation-locking element borne by the support (6), when the insert (1) is in the locked state, **characterized in that** the head (2) comprises an axial stop element (8a, 8b) configured so as to cooperate with the abutment (5a, 5b) in order to axially lock the support between the abutment (5a, 5b) and said axial stop element (8a, 8b), and **in that** the stop element (8a, 8b) is formed in a projecting manner from a surface (2a) of the head (2) bearing the first locking element (7a, 7b), said stop element (8a, 8b) being configured so as to interpose, in the locked state, a free space (E) between said surface (2a) of the head (2) and the support (6) so as to allow access to the first locking element (7a, 7b).

2. Insert according to Claim 1, **characterized in that** the first rotation-locking element (7a, 7b) comprises at least one tongue (7a, 7b) mounted on the head (2), in particular mounted at the periphery of the head (2), and extending from the head (2) in the direction of the elongate body (3).

3. Insert according to Claim 2, **characterized in that** each tongue (7a, 7b) is elastically deformable, and is configured so as, in the locked state, to constantly stress the head (2) in a direction opposed to said support (6).

4. Insert according to any one of the preceding claims, **characterized in that** it comprises, at a face (2b) opposed to that from where the elongate body (3) extends, an element (9) for rotating the insert (1) that is formed by a negative imprint produced in the head (2), or by a gripping element projecting from the head (2).

5. Arrangement for a motor vehicle comprising a support (6) and at least one insert (1) according to any one of the preceding claims mounted on the support (6), and positioned in the locked state on the support (6), **characterized in that** the first locking element comprises two opposed tongues (7a, 7b) arranged along a Y axis, each extending from the head (2) in the direction of the elongate body (3) of the insert (1), and each cooperating with the support (6) to inhibit the rotation of the insert (1) about the Z axis in the locked state, and **in that** a stop element (8a, 8b) projecting from the head (2), intended to provide, together with the abutment (5a, 5b), translational locking along the longitudinal axis Z, extends along a substantially horizontal X axis passing through the front and the rear of the vehicle, said stop element being in contact with the support (6) and configured so as to allow the passage of a tool between the head (6) and the support (6) so as to move free ends of the tongues (7a, 7b) toward one another in the direction of the head (2) so as to allow the rotation of the insert (1) about its longitudinal axis Z in order to pass from the locked state of the insert (1) to the unlocked state of the insert (1), said Y axis being substantially horizontal and substantially perpendicular to the X axis.

6. Arrangement according to Claim 5, **characterized in that** it comprises a vehicle functional element, such as a cooling module, and **in that** the end (3a) of the elongate body (3) opposed to the head (2) of the insert (1) cooperates by coupling with a member (10) for mounting the functional element, the elongate body (3) of the insert comprising a break initiator (11) situated between the support (6) and the mounting member (10), said elongate body (3) extending along its longitudinal axis Z in a substantially vertical direction.

7. Motor vehicle comprising an arrangement according to Claim 5 or 6.
